Europäisches Patentamt

European Patent Office

Office européen des brevets

(11) Publication number: **0 377 515**
**A2**

# EUROPEAN PATENT APPLICATION

(21) Application number: 90300117.0

(51) Int. Cl.⁵: **G06F 15/21**

(22) Date of filing: **05.01.90**

(30) Priority: **05.01.89 GB 8900172**

(43) Date of publication of application:
**11.07.90 Bulletin 90/28**

(84) Designated Contracting States:
**AT BE CH DE DK ES FR GB GR IT LI LU NL SE**

(71) Applicant: **AGB RESEARCH PLC**
**The Research Centre West Gate**
**London W5 3HH(GB)**

(72) Inventor: **Foley, Timothy John**
**41 Manor Road**
**West Ealing London W13 0JA(GB)**
Inventor: **Zachariah, Adrian Neville**
**56 Shaldon Drive**
**South Ruislip Middlesex HA4 0UL(GB)**

(74) Representative: **Godsill, John Kenneth et al**
**Haseltine Lake & Co. Hazlitt House 28**
**Southampton Buildings Chancery Lane**
**London WC2A 1AT(GB)**

(54) **Market research systems and equipment.**

(57) Equipment for ascertaining public buying habits comprises a portable terminal (1) coupled to a modem (2) whereby a remote station can supply data to and read data from the terminal. A bar code reader (8) is coupled to the terminal (1). A code book (3) contains groups of bar codes (9) pertaining to respective products or product types. The code reader (8) is used to read a first code of a group to define the product type purchased. This causes the terminal to select a series of prompts pertaining to that product type from downloadable table. The prompts are presented in sequence at the terminal and are answered by using the code reader to read bar codes from respective sets of the selected group, the sets defining attributes of the product or product type. The bar codes in each set define values lying within specific ranges verified by the terminal before proceeding to the next prompt.

Fig. 1.

EP 0 377 515 A2

## Market Research Systems and Equipment

### BACKGROUND OF THE INVENTION

This invention relates to data gathering and questionnaire answering equipment and is applicable particularly to market research systems and equipment.

In one area of market research the researchers attempt to assess buying habits by arranging for groups of families to record their purchases, especially product name, type, packaging, quantity, price, country of origin, shop and so on. To assist in this process, many products have bar codes including some of that data. It is thus possible to provide the selected homes with bar code reading devices having memory to retain the bar code data and additional data, e.g. on price and shop, entered by the user via a keyboard of the device. At least at night, the device can be coupled by a modem to the telephone network by which a host computer can interrogate all the devices and extract the stored data for analysis.

Many purchases e.g. fresh foods, do not include bar codes, so such a system requires supplementing by a book of tables of data which the users need to complete in respect of such purchases. Such a book is subject to many errors of entry and, moreover, introduces a delay in the process of passing data from the shopper to the market research organisation and in verifying and correcting the received data.

### SUMMARY OF THE INVENTION

The present invention proposes a technical solution to this problem by the use of a code device having a plurality of machine readable codes arranged in the form of questions and multiple-choice answers so that a code reading device can collect data by scanning selected codes of the code device.

Thus, according to one aspect of the invention, there is provided a data gathering system comprising: a terminal having means for displaying a sequence of prompts or questions, a code reader for reading machine readable codes and means for determining at least one of the questions or prompts in dependence upon a read code: and a code device having a plurality of zones each containing a machine readable code, the zones being arranged in sets to define in each set alternative answers to a question or prompt presented by the terminal.

For market research purposes, the sets are preferably arranged in groups, with the groups pertaining to respective items e.g. products or product types. Generally, depending upon the item concerned, a different sequence of data is to be gathered, so that different routes are to occur through the sets.

Accordingly, the terminal may store these sequences, having means for identifying from a read item code the item and sequence concerned, and means for utilising the associated sequence to produce a series of prompts on the terminal corresponding to the sequence of sets of codes to be selected by the user. The sets of the code device would thus normally be associated with printed labels related to the corresponding prompts.

Within a group all the codes in the sets are preferably unique. More especially the codes may all be unique throughout the code device. Within a set, all the codes preferably belong to a unique sequence of code values.

The stored sequences may additionally include, for each prompt, data defining the valid codes values pertaining to that prompt, e.g. such data may be a range of codes values unique to the set concerned. The terminal then may include data verifying means ensuring that a read code is within the specified range, repeating the prompt for re-entry of a code when invalidly is detected.

The various terminal means may be provided by software and the stored sequences may be provided as data in a section of read/write memory. A host computer can then download new stored sequences into that memory when required, e.g. for use with a different code device.

According to a second aspect of the invention, there is provided a code device for use in a system according to the first aspect and comprising a plurality of zones, each containing a machine readable code, and the zones being arranged in sets to define in each set alternative answers to a question, the sets being arranged in groups providing sets of answers to at least one sequence of questions per group.

A preferred embodiment of code device has codes which are all unique (or at least unique within a group) so that validity checks can be carried out to prevent acceptance of read codes not belonging to a given sequence to ensure that the codes are read in the given sequence.

As an example, a group of sets of codes will be physically organised in the code device so that the sets follow one another as far as possible in the given sequence or sequences pertaining to that group.

Thus, assuming a group relates to an item which is dried and soft fruit, a first set of the group may consist of four code zones in a first area and respectively labelled 'Dried Fruit', 'Dried Fruit Mix', 'Soft Fruit' and 'Soft Fruit Mix'. All such item-defining-sets (some of which may have only one code zone) have codes machine detectably distinct from all other codes of the code device, e.g. of format xxXx, whereas the subsequent answer codes could be of the format Xxx (when X represents an upper-case character and x represents a digit). The four codes in the example might thus be 29A1, 29A2, 44A1 and 44A2, uniquely defining four products. However, the first two digits are used in the terminal to define a question sequence, i.e. the same sequence is used for both types of dried fruit product.

Located adjacent the item set is a second set of codes arranged in two sub-sets, one for dried fruit and the other for soft fruit, but both labelled 'Type'. The respective codes of the sub-sets may be, for example, I01 to I07 and I10 to I24. A third set may be located adjacent the second, labelled 'Packaging' and containing codes J01 to J05.

Thus, the terminal will contain for item designation 29, a sequence including I01-I07, J01-J05, together with data defining associated prompts and together with data causing the issue of additional prompts (such as 'Price?', 'Weight?' and 'Country of origin?') requiring keyboard entry of data or code entry.

It will thus be appreciated that an aspect of the invention concerns a code device having a plurality of zones containing machine readable codes, with the zones physically arranged in sets, the sets physically arranged into the groups and the codes containing data defining the specific set within a group and the specific code zone within a set.

The various blocks, sets and groups are preferably labelled by printed labels to identify them to a user and they may additionally be set out in the form of a book and be produced by printing. Routes through the book may be identified by appropriate guide lines. However, it will be seen that the resulting 'book', is more than either a literary work or a mere display of information, but rather is a technical device, technically reacting with a terminal device and providing a technical solution to a data gathering problem.

## BRIEF DESCRIPTION OF THE DRAWINGS

For a better understanding of the invention and show how the same may be carried into effect, reference will now be made, by way of example, to the accompanying drawings, in which:

Figure 1 is a diagram of a market research terminal equipment and code device;

Figure 2 is a diagram of a keyboard;

Figure 3 is a diagram of memory layout;

Figures 4 and 5 are flow charts;

Figure 6 is a purchaser section of a code device;

Figure 7 is a flow chart;

Figures 8 and 9 are further sections of a code device; and

Figures 10 and 11 are flow charts.

## DESCRIPTION OF A PREFERRED EMBODIMENT

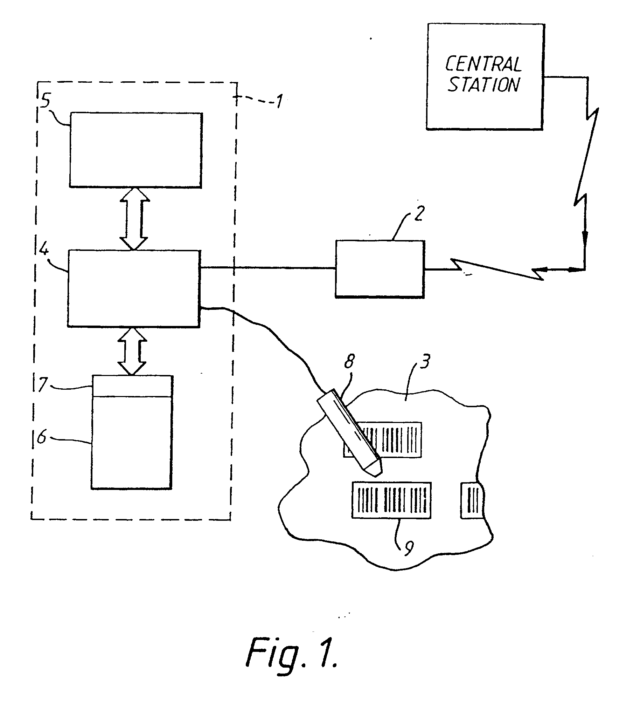

This embodiment relates to market research equipment for use in ascertaining the buying habits of a test panel selected from members of the public. Each family of the test panel is provided with equipment shown diagrammatically in Figure 1 and comprising a portable or hand held terminal 1, a modem 2 and a bar code reading device 3.

The hand held terminal 1 may be of the type manufactured by MSI Data Corporation of the USA, Model SDT, incorporating a central processor unit 4 with no more than 1Mb, e.g. 64 Kb, of memory. This unit corporates RAM 5, holding application software and data tables, and also a customised keyboard 6 and display panel 7. As shown in Figure 1, central processor unit 4 is coupled to the modem 2, which itself is coupled to a telephone line whereby the terminal 1 may be interrogated from a remote central station and data obtained from the use of the terminal down-loaded into the central station, i.e. a central host computer. The host can also load data into RAM 5.

The central processing unit 4 is additionally coupled to a scanner wand 8, which may be a 6 mil scanner wand as manufactured Welch Allyn.

The bar code device 3 is shown diagrammatically Figure 1 to comprise an array of bar codes 9 the purpose of which will be described in more detail hereinafter.

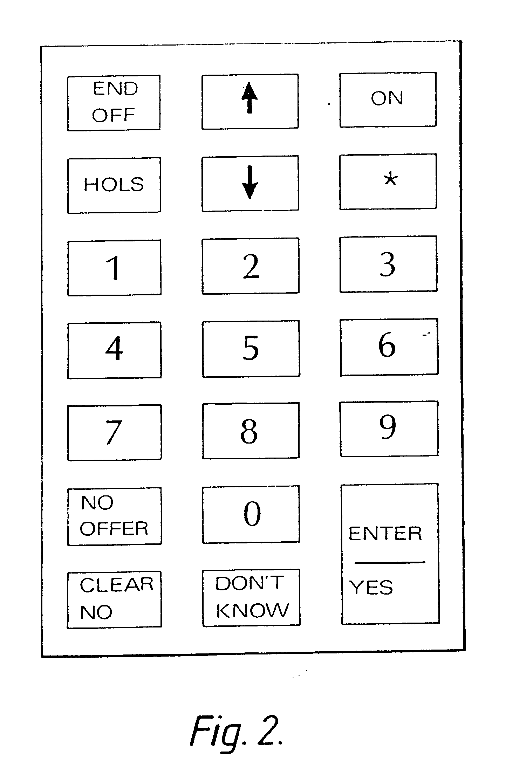

Figure 2 shows the form of the keyboard 6 and the designation attached to each of its keys

3

corresponds to the designation which is printed on each key. This keyboard is intended to work in conjunction with data messages or prompts displayed on the display panel 7 and also in accordance with data obtained by reading bar codes 9 by means of the wand 8. Messages and prompts form part of an extensive menu system through which a plurality of routes exist depending upon data supplied to the central processing unit 4 from the wand or the keyboard.

There are twenty keys on the keyboard which have the following functions:-

ON

Turn on the terminal

END/OFF

This key acts as an OFF key only from the top level of the menu structure. Its purpose is to turn off the terminal display. Then END function is used at certain points in the system, to 'end' an operation.

CLEAR/NO

The NO operation is used to answer No to any prompted question. CLEAR clears a current value from the screen or will allow the user to go back to the previous prompt.

ENTER/YES

ENTER is used to specify the acceptance of a value or to move to the next lines of a message.

YES is used to specify the acceptance of a prompt. Up arrow

Used to move to the next message line on the display panel.

Down arrow

Used to move to the next message line on the display panel

DONT KNOW

Used to say 'dont' know' to a 'price' or 'weight' prompt.

Digits 0 to 9

Used to enter values at 'price' and 'number of items' prompts.

HOLS

Pressed at the top level of the menu structure only, when household is going on holiday (sets a holiday flag in the terminal).

NO OFFER

Pressed to signify 'no offer' at an OFFER CODE prompt.

* Pressed at top level menu only, to display date and time.

As already indicated, the central processing unit 4 incorporates software, the details of which may be found from flow charts described hereinafter and shown in subsequent figures.

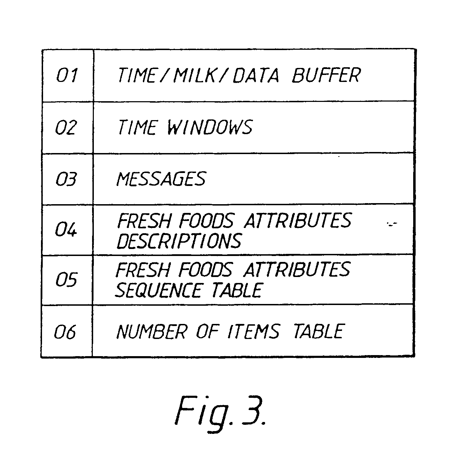

Attention will now be directed to a parameter file which is stored in the RAM 5 and which determines the manner in which the software operates, in particular defining alternative sequences of operation, jumps, prompts and messages. This file is organised as a series of records each commencing with two digits from "01" to "11", thus defining 11 distinct segments of the file. Figure 3 is a diagram representing the physical layout of this file. The details of the file layout are as follows (as indicated any record in the file can be replaced by down-loading from the host computer):


Parameter File Layout

| TIME / DAYLIGHT SAVING CORRECTION / NEW PROGRAM / DATA BUFFER / MILK | | | |
|---|---|---|---|
| (Max 1 record only) | | | |
| **Coll** | **Range** | **Type** | **Description** |
| 1-2 | 01 | ASCII | Record type. |
| 3-8 | DDMMYY,spc. | ASCII | Set terminal Date<br>DD = Day MM = Month YY = Year. |
| 9-14 | HHMMSS,spc. | ASCII | Set terminal time<br>HH = Hours MM = Mins SS = Secs. |
| 15-28 | DDMMYYHHMMPCCC,spc. | ASCII | Daylight saving time correction<br>DD = day MM = month YY = year<br>HH = Hours MM = mins<br>P = + for positive, - for negative<br>CCC = time drift in minutes. |
| 29-40 | | ASCII | Download program name |
| 41-52 | DDMMYYHHmmSS,<br>000000000000,spc | ASCII | Execute program time<br>DD = day MM = month YY = year<br>HH = hour mm = mins SS = seconds<br>If zeroes then execute immediately. |
| 53 | C,B,A,spc. | | Transfer buffer flag<br>C = current B = backup A = both(all). |
| 54 | 0,1,spc | | Off hook detect flag<br>0 = enable, 1 = disable. |
| 55 | 0,2,spc | ASCII | Regular milk delivery flag<br>1 = regular milk, 0 = no reg. milk |

| TIME WINDOWS | | | |
|---|---|---|---|
| (Up to 2 records ie max 8 windows) | | | |
| If a windows record is sent, replace all windows with new information. | | | |
| **Coll** | **Range** | **Type** | **Description** |
| 1-2 | 02 | ASCII | Record type. |
| 3-15 | DDDDDDDHHMMNN | ASCII | Window 1 start time and duration -<br>DDDDDDD = Day of week (first is<br>Monday),HH = hours MM = mins NN = duration of<br>window in mins. |
| 16-28 | DDDDDDDHHMMNN | ASCII | Window 2 start time and duration. |
| 29-41 | DDDDDDDHHMMNN | ASCII | Window 3 start time and duration. |
| 42-54 | DDDDDDDHHMMNN | ASCII | Window 4 start time and duration. |
| 55 | Spaces | ASCII | Filler. |

| **FRESH FOODS NUMBER OF ITEMS POINTER TABLE** | | | |
|---|---|---|---|
| (Max 2 records ie up to 50 description product fields) Will totally replace current table in terminal. | | | |
| **Coll** | **Range** | **Type** | **Description** |
| 1-2 | 06 | ASCII | Record type. |
| 3 | 1-99 | BINARY | FF product field code. |
| 4 | 1-255 | BINARY | 1st description pointer. |
| 5 | 1-255 | BINARY | 2nd description pointer. |
| (repeat colls 4 and 5 for 25 times up to coll 55) | | | |

| **MESSAGES** | | | |
|---|---|---|---|
| (up to 7 records ie 21 message lines) Replace current message with new message. | | | |
| **Coll** | **Range** | **Type** | **Description** |
| 1-2 | 03 | ASCII | Record type. |
| 3-18 | | ASCII | Message line 1. |
| 19-34 | | ASCII | Message line 2. |
| 35-50 | | ASCII | Message line 3. |
| 51-55 | Spaces | ASCII | Filler. |

| **FRESH FOODS ATTRIBUTE DESCRIPTION TABLE** | | | |
|---|---|---|---|
| (Max 85 records - ie 255 descriptions) These records will totally replace current table in terminal. | | | |
| **Coll** | **Range** | **Type** | **Description** |
| 1-2 | 04 | ASCII | Record type. |
| 3 | 1-255 | BINARY | Att. description code. |
| 4-19 | | ASCII | Att. description. |
| 20 | 1-255 | BINARY | Att. description code. |
| 21-36 | | ASCII | Att. description. |
| 37 | 1-255 | BINARY | Att. description code. |
| 38-53 | | ASCII | Att. description |
| 54-55 | Spaces | ASCII | Filler. |

**FRESH FOODS ATTRIBUTE SEQUENCE TABLE**

(One record per product field up to 50 product fields)
Will totally replace current table in terminal.

| Coll | Range | Type | Description |
|---|---|---|---|
| 1-2 | 05 | ASCII | Record type. |
| 3 | 1-99 | BINARY | FF product field code. |
| 4 | A-Z | ASCII | Coll ID. |
| 5 | 1-255 | BINARY | Att. description code (coll 1). |
| 6 | 0-99 | BINARY | Lower range (coll 1). |
| 7 | 0-99 | BINARY | Upper range (coll 1). |
| (repeat colls 4 - 7) 11 times | | | |
| 48 | A-Z | ASCII | Coll ID. |
| 49 | 1-255 | BINARY | Att. description code (coll 12). |
| 50 | 0-99 | BINARY | Lower range (coll 12). |
| 51 | 0-99 | BINARY | Upper range (coll 12). |
| 52-55 | Spaces | ASCII | Filler. |

The memory of the terminal additionally incorporates a section in which data is logged concerning the terminal, its usage and the data entered by the user. This section of the memory is read from time to time by a host computer via the modem in order to extract the purchase data which has been accumulated during use. One example of a possible file layout (also shown in Figure 3) for this purpose is as follows:

File Layout (1st Call Records)

| DATE AND TIME | | | |
|---|---|---|---|
| Coll | Range | Type | Description |
| 1-2 | 01 | ASCII | Record type. |
| 3-8 | DDMMYY | ASCII | Terminal Date at start of transmission. |
| 9-14 | HHMMSS | ASCII | Terminal Time at start of transmission. |
| 15-22 | 00000000-99999999 | ASCII | Parameter file name (normally the H/H panel number. Trailing spaces.) |
| 23-38 | | ASCII | H/H Phone Number |
| 39-43 | | ASCII | Program Version number. |
| 44 | space or 1 | ASCII | Out of memory flag 1 = terminal out of memory. |
| 45 | space or 1 | ASCII | Holiday Flag. 1 = on holiday. |
| 46 | 1,0 | ASCII | Regular Milk Delivery 1 = YES 0 = NO. |
| 47 | 1,0 | ASCII | Phone socket reqd in kitchen? 1 = YES 0 = NO. |
| 48-52 | Numeric | ASCII | Terminal Serial Number. |
| 53-59 | Numeric | ASCII | Modem Serial Number. |
| 60 | 0,1 | ASCII | Dial flag, 0 = manual 1 = Auto dial. |
| Terminal returns date and time at start of transmission, current program version, the status of the holiday flag, the memory status and the name of the parameter file on the host plus other details that were entered during installation. | | | |

| DIAGNOSTIC - INCOMING CALLS ANSWERED | | | |
|---|---|---|---|
| Coll | Range | Type | Description |
| 1-2 | 50 | ASCII | Record type. |
| 3-4 | 00-99 | ASCII | Status code. |
| On each occasion that the terminal answers a call the outcome must be logged. (codes supplied by MSI) | | | |

| DIAGNOSTIC - INCOMING CALLS DETECTED | | | |
|---|---|---|---|
| Coll | Range | Type | Description |
| 1-2 | 51 | ASCII | Record type. |
| 3 | 0,1 | ASCII | Status code.<br>0 = Call outside window.<br>1 = Call already answered in this window |

| DIAGNOSTIC - TIME CORRECTION EVENT | | | |
|---|---|---|---|
| Coll | Range | Type | Description |
| 1-2 | 52 | ASCII | Record type. |
| 3-8 | DDMMYY | ASCII | Date of time correction. |
| 9-14 | HHMMSS | ASCII | Hours, Minutes, Seconds the time was corected by. |
| Each time the clock is adjusted in the terminal the event should be logged.<br>The correction can occur when the Host sends a new date/time or a daylight saving time correction parameter. | | | |

File Layout (2nd Call Records)

| DATA HEADER RECORD | | | |
|---|---|---|---|
| Coll | Range | Type | Description |
| 1-2 | 00 | ASCII | Record type. |
| 3-10 | 00000000-99999999 | ASCII | Panel Number. |
| 11-12 | 00-99 | ASCII | Count of message usage. |
| 13-14 | 00-99 | ASCII | Count of demonstration usage. |
| 15-16 | 00-99 | ASCII | Count of '*' key usage. |

8

| SHOP HEADER RECORD | | | |
|---|---|---|---|
| Coll | Range | Type | Description |
| 1-2 | 01 | ASCII | Record type. |
| 3-4 | 0-9 | ASCII | Purchaser code. |
| 5-7 | 000 - 999 | ASCII | Shop code, |
| 8-12 | 00000 - 99999 | ASCII | Total spent at store. |
| 13-18 | DDMMYY | ASCII | Day/Month/Year of shopping trip. |
| 19-22 | HHMM | ASCII | Hour/Minute start of shop trip. |
| 23-26 | HHMM | ASCII | Hour/Minute end of shop trip or 9999 if polled during time out. |

| PURCHASE RECORD - standard purchase | | | |
|---|---|---|---|
| Coll | Range | Type | Description |
| 1-2 | 02 | ASCII | Record type. |
| 3-15 | 1-9999999999999 | ASCII | Barcode. (leading spaces) |
| 16 | 0,1 | ASCII | Entry/Scan flag. 1 = Entered, 0 = scanned. |
| 17-18 | 00-99 | ASCII | Offer code. |
| 19-20 | 00-99 | ASCII | Number purchased. |
| 21-25 | 00000-99999 | ASCII | Price paid. |

| PURCHASE RECORD - fresh foods record. | | | |
|---|---|---|---|
| Coll | Range | Type | Description |
| 1-2 | 03 | ASCII | Record type. |
| 3-6 | 0001-9999 | ASCII | Fresh foods product field (entry level code). |
| 7-n | Numeric | ASCII | Free format - depending on attributes required, each attribute code is 2 characters. |

| PURCHASE RECORD - random weight record. | | | |
|---|---|---|---|
| Coll | Range | Type | Description |
| 1-2 | 04 | ASCII | Record type. |
| 3 - 15 | XXNNNNNNNNNNN | ASCII | Barcode - XX = 20,02,00 N = rest of barcode. |
| 16-20 | 00000-99999 | ASCII | Price paid. |
| 21-22 | 00-99 | ASCII | Weight code. |

The software within the terminal, and which may be down-loaded by the modem from the host computer, will now be described in relation to description of examples of operation, together with flowcharts in the figures.

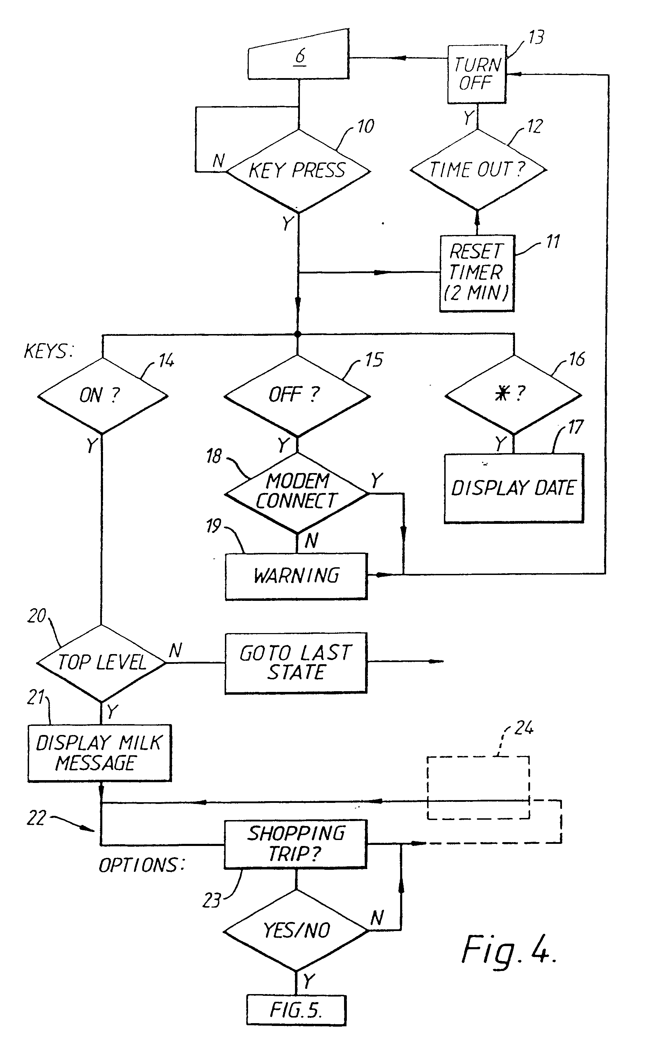

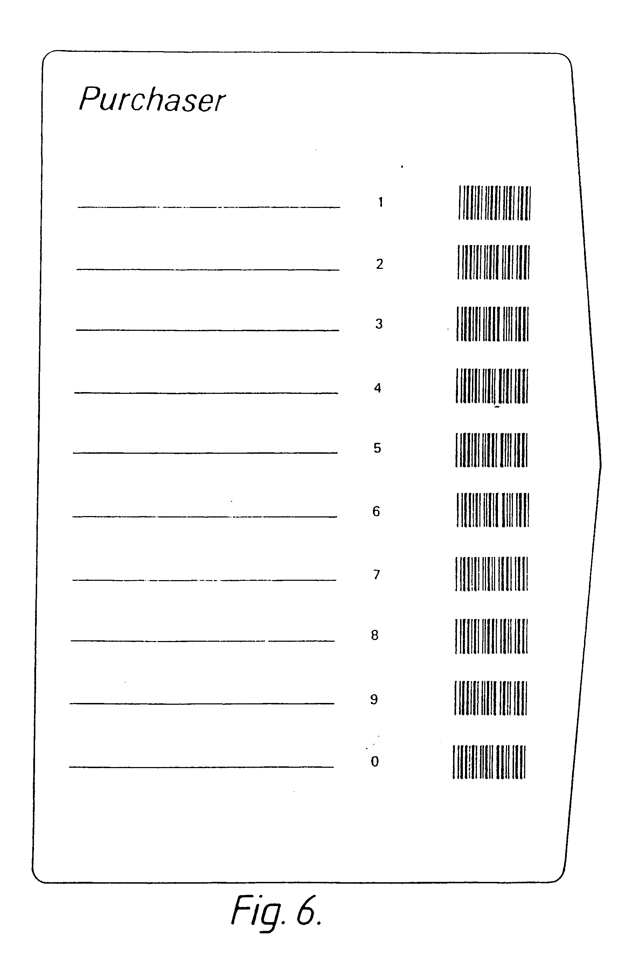

In Figure 4, 6 designates the keyboard and 10 designates a test for whether any key has been pressed. If a key is pressed a timing count maintained by the microprocessor is reset at 11. This count is tested at 12 for a time-out of two minutes and if this time-out occurs then at 13 the current state of the process is logged in memory and the terminal put into its "off" state in which the microprocessor and memory remain energised to preserve data but otherwise the terminal is inactive. Key presses of ON, OFF and * are

9

detected at 14, 15 and 16. If the * key is activated, then at 17 the currently stored date is displayed. If on the other hand the OFF key is detected, a test is made at 18 to ensure that the modem is connected. If not, a warning is issued at 19 before the process returns to 13 to store the current state and deactivate the terminal. If the ON key is detected, at 14, then the last used state is detected at 20 and if it was not at a top menu level then the system goes to the last state utilised. Otherwise a test is made at 21 to see if any milk message (described later) is present and if it is present the message is displayed.

The process then proceeds to a top level menu at 22 in which a prompt is displayed at 23. There is a further, hidden, option 24 which is only displayed by pressing the HOLS and DONT KNOW keys at the same time. This will only normally be known to the installer of the terminal and enables him to initialise data on installation.

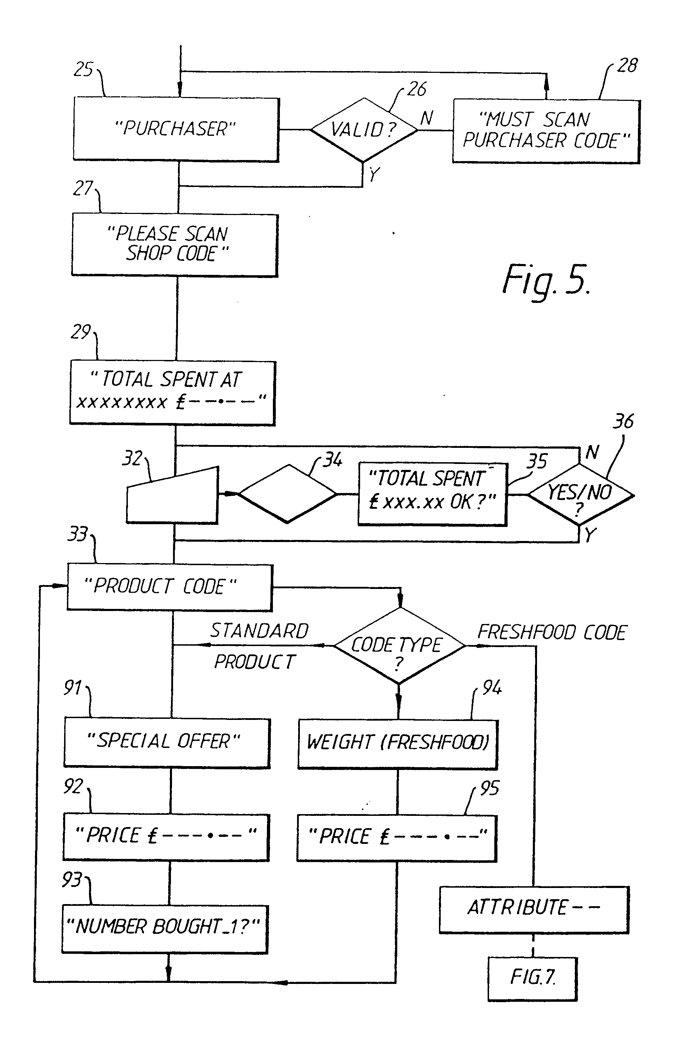

Figure 5 demonstrates the outline of the process carried out when the shopping trip selection is made from the top level menu options shown in Figure 3. The first step is at 25 and is the issue of the prompt "purchaser" and this requires the user to scan the appropriate bar code from a set in the device 3. In this case the purchaser bar codes represent values from "$00" to "$09". The device 3 is preferably formed as a code book which is multi-page booklet containing a plurality of bar codes which are unique, that represent coded answers to prompts given by the software and which are all in Code39 format with a leading character or characters to describe the corresponding software prompt. This allows the software to check that the correct part of the code book or device has been scanned. The bar codes are arranged in the device in sets (in certain special cases a set may contain a single item), each set of bar codes being related to assist software analysis.

Figure 6 shows by way of example the purchaser section of the code book or device 3 and it will be seen to comprise an instruction heading to the user, the ten necessary bar codes and adjacent that indicated spaces within which each member of a household may enter his name as an aid-memoir. It will be apparent that the user is not aware of what is in each code although he can obviously assume that it incorporates a digit from 0 to 9 corresponding to the data printed on the particular page.

Returning now to Figure 5, the value entered by scanning the bar code of Figure 6 is tested for validity at 26 to ensure that the correct combination of characters exists and if it does the process proceeds to prompt 27. Otherwise the software produces a prompt at 28, "must scan purchaser code" and after four bleeps and a two second display returns to position 25. At 27 the prompt "please scan shop code" is displayed and this should be read from a further set of bar codes in the code book or device. This set of shop codes ranges from "%000" to "%999", the numeric part of which is a shop code identifying the shop concerned. This result is scanned for a valid code in a manner equivalent to that shown at 26 and 28, these logical steps not being illustrated in the Figures for simplicity.

At 28, the prompt "total spent at xxxxxxxx £--.--" is displayed, where x is an eight character shop name obtained from the shop code table in the parameter file. The value concerned is obtained from the keyboard at 32 and is stored in memory as a five character field with an implied decimal point. The value is entered from the keyboard and traverses from right to left (calculator style). The ENTER key must be pressed in order to store the value and then cause the system to move the next prompt at 33. A test of this value is indicated at 34. If the value is greater than £150 or less than 50p the terminal displays at 35 the prompt "total spent is £xxx.xx - OK?". By pressing the YES key this value will be accepted and the system will move to prompt 33. The NO key returns to the "total spent" prompt and clears the value thus far obtained.

At 33 the "product code" prompt is issued. It is a 13 character field for storage and is initially displayed as blank. The code may be introduced into the terminal either by keying it in full or by use of a bar code. If it is keyed in, any numerical value from 1 to 13 digits may be entered. If the number of digits is 8 or 13 then the code is validated using check digit rules for UPC/EAN bar codes. If the code is rejected and then exactly the same code is entered again it will be accepted on the second occurrence. If validation fails then a prompt "incorrect product code" is displayed for three seconds along with four bleeps. The product code is finally redisplayed and if any number of digits other than 8 or 13 has been entered the display will prompt with "product code OK?" followed by the emtered code. Pressing the YES key will store this value and move to the next step and the NO key will clear the value and return to position 33.

If bar code scanning is chosen, then it will be apparent that many products obtained during shopping already contained their own bar code, and this might be a price encoded product code or a standard product code which will be described in more detail. Many products and in particular fresh foods do not have any bar codes however. To avoid the user having to ascertain a suitable code for entering via the keyboard, the code device or book 3 provides "artificial" bar codes in special format and which contain hidden information controlling the further progress of the software.

The price encoded product code already mentioned is one that contains the price of the product within the data held and such codes may be generated, for example, by a weighing machine at a fresh fish counter. The code is identified by the following rules: The bar code must be a 13 digit EAN code; the first two digits must be 02 or 20, or the first two digits are 00 and the shop code already scanned is 860 (a particular code used by Marks and Spencers whose shop code includes this number in the shop or store bar code section of the device or book 3).

A standard product code is any 8 or 13 digit UPC or EAN bar code that does not fall in the price encoded category described above.

The fresh food bar code is an "artificial" code that is used when the product does not have its own bar code in order to obviate the need for purchasers to write any supplementary information into a booklet. The code is identified by the following features: it must be scanned and not keyed; it must of four digits and in Code39 format; and the third character must be alpha only.

To end the shopping trip entry, the user presses the END key while at the product key prompt and when there is no value in the product code field. After END is pressed the display will show "Everything entered?" with the NO key returning to product code prompt 33 and the YES key returning to the "shop trip?" prompt at 23.

Attention will now be directed particularly to the fresh food code route which is indicated in Figure 5 as providing a series of steps labelled "attribute" which involves a series of prompts determined by the product code and by the fresh foods attribute sequence table in the parameter file, as is now to be described.

In addition to the attribute the system collects price, country of origin, number of items purchased and the weight where applicable and as determined by the data in the fresh foods attribute sequence table. The information is gathered using the code device or book 3. Once the software has encountered a fresh food bar code it can ascertain from the product field already gathered what specific series of attributes is to be presented to the user as being applicable only to that product type. Any changes made to attribute descriptions or their positions in the code device will be taken into account by the software without loading a new program. This is achieved by maintaining two parameter driven tables, the "fresh foods attributes description table" and the "fresh foods attributes sequence table", defined above. Records in these tables may be updated from the host computer via the modem in order to obtain changes in operation in the system.

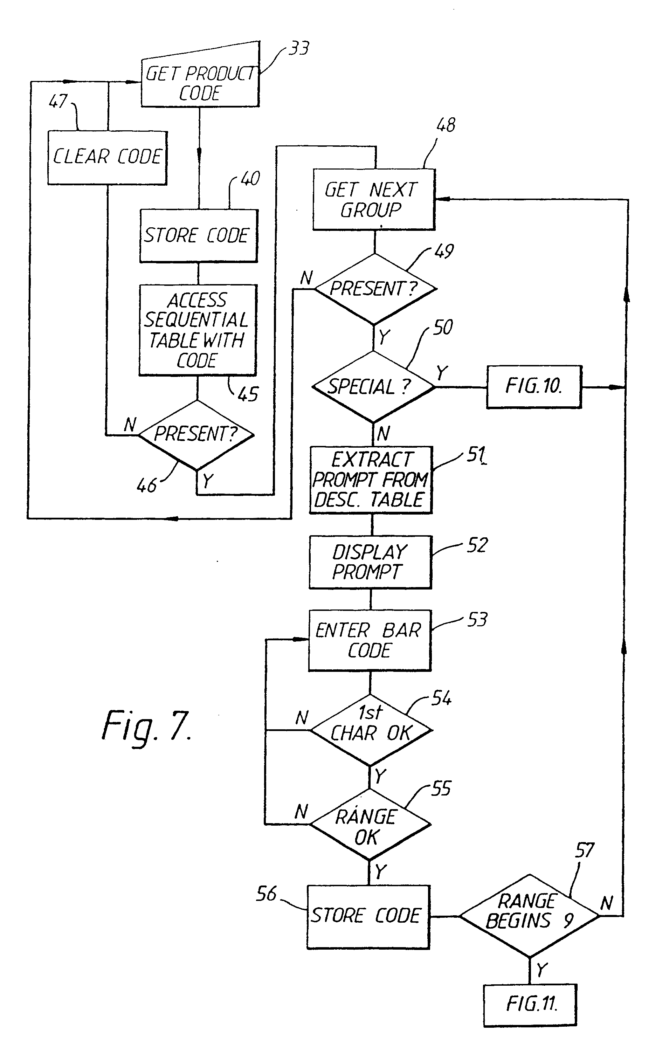

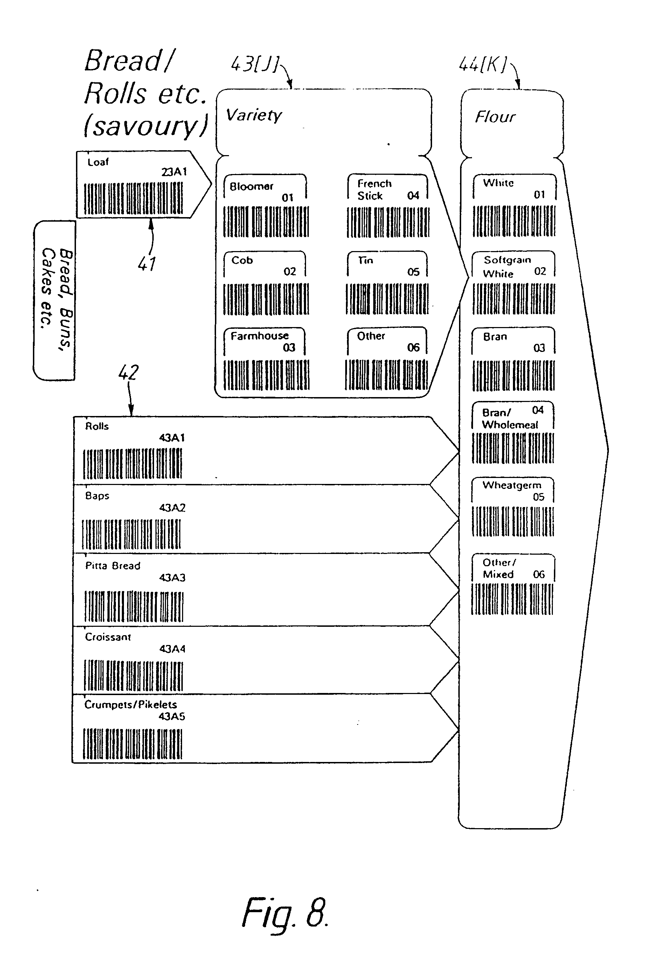

Figure 7 is a flow chart of the operation of the software in dealing with these attribute prompts. Figure 7 commences with step 33 which is the presentation of the "product code" prompt for which a valid bar code will have presented a value in the form abXc, where the lower-case characters represent numbers and the upper-case character represent a character. At 40 the validated code is stored in the "purchase record" for fresh foods, i.e. records commencing 03, followed by the fresh food product code, followed by the subsequent answer to the attribute questions to follow. The first two digits, ab, of the product code are used to access the corresponding record in the fresh foods attributes description table of the parameter file, the format of which was described above. This gives access to the specific product description which will be displayed below the "product code" prompt of step 33. By way of example, let us assume that the purchaser has acquired some croissant and therefore has opened his code book at a page shown in Figure 8. In this specific example there will be seen to be four sets of bar codes, being set 41 having a single entry for a loaf and characterised by the leading digits 23, set 42 relating to various rolls and defined by leading digits 43, a set 43 relating to "variety", and a set 44 relating to the type of flour. Sets 41 and 42 are product codes in this example and sets 43 and 44 are examples of "attributes". Associated with the "variety" attribute of set 43 is a leading code character (not printed on the page), which is a J as indicated in square brackets following numeral 43, and in respect of attribute 44 a distinguishing leading character K is employed.

Let it be assumed that the purchaser has acquired some croissant and will have scanned the bar code adjacent to that term in Figure 8, thus causing the value 43A4 to be entered and to be validated and then stored as at 40. The digits 43 are then used at 45 to access the data in the attribute sequence table using the digits 43. The portions of this table relating to the product ranges 23 (loaf) and 43(rolls) could be as follows:

| | | | |
|---|---|---|---|
| 23 | J 006 01 06 | K 010 01 06 | L 011 01 04 |
| | M 012 01 03 | N 009 88 89 | 004 |
| | 003 | | |
| 43 | K 010 01 06 | L 011 01 04 | M 012 01 03 |
| | N 009 89 90 | 004 | 003 |

11

The section of memory in the sequence table containing such data commences with the distinguishing digits 05 followed by the two digit product code followed up to 12 groups of 4 items. As shown above, product 23 has seven groups and product 43 has six groups, the final two groups in each case only having a single item.

If the table does not contain the necessary two digit product code, this is detected at 46 and the data is cleared at 47 and the system returns to the 'product' prompt.

Continuing with the specific example given, it will be seen that the first attribute group obtained at 48 in Figure 7 will consist of four items:

K 010 01 06.

When, as in this example, the group is found, a test is made at 50 to see if the three digit number which is the second element in the group is one of four special codes 001 to 004 which will be described shortly. If it is not, then an appropriate attribute prompt is extracted from the description table at 51 and displayed at 52. The following is an example of relevant portions of the description table:

001 Country of Origin

002 Weight

003 Number of Items

004 Price

005 Colour of Eggs 006 Variety

...

009 Packaging

010 Flour

011 Brand

012 Baked in Store

017 Items in Pack

018 Quantity

...

036 Number of Fruit

037 Number of Vegetables

In the example being considered, the attribute group contains as its second element 010 which, when used to access the description table, will be seen to produce the prompt "flour" which is then presented to the user as indicated at 52. In other words the user is instructed to use the bar codes to enter the appropriate type of flour. Thus, for convenience of the user, the set 44 (Figure 8) relating to flour is physically presented adjacent the set 42 which he has just used, with printed arrow-like marks to assist this process. Set 44 contains six distinct bar codes with corresponding printed descriptions to assist the user to make a selection. When the user has entered the bar code at 53, the bar code is validated in two stages. Firstly, the leading character of the bar code is checked at 54 against the first item of the attribute group and in this case it is K. Then at 55 the digits following the K in the bar code are compared against the third and fourth items of the attribute group which represent the allowable range, and this example from 01 to 06. It will thus be seen that the user is positively directed to the correct code set not only by the physical layout of the codes but also by the invisible internal code format and also by the parameters given in the attribute table. Once validated, the code is stored in memory at 56, a test is made at 57 to see if a special code number 90 to 99 is present (described later) and the next group is found at 48. Following through the specific example, it will then be seen that the next attribute group obtained is:

L 011 01 04

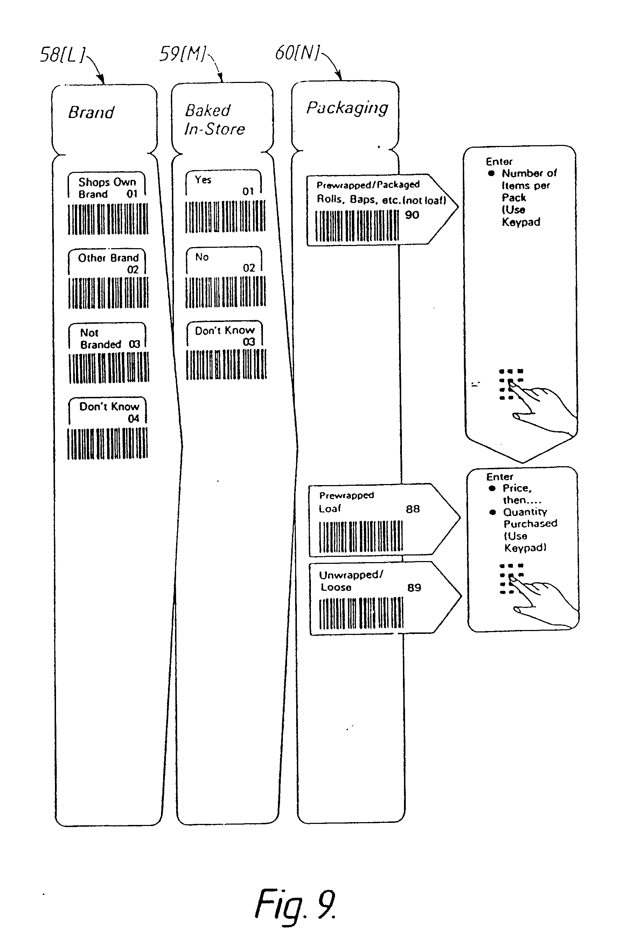

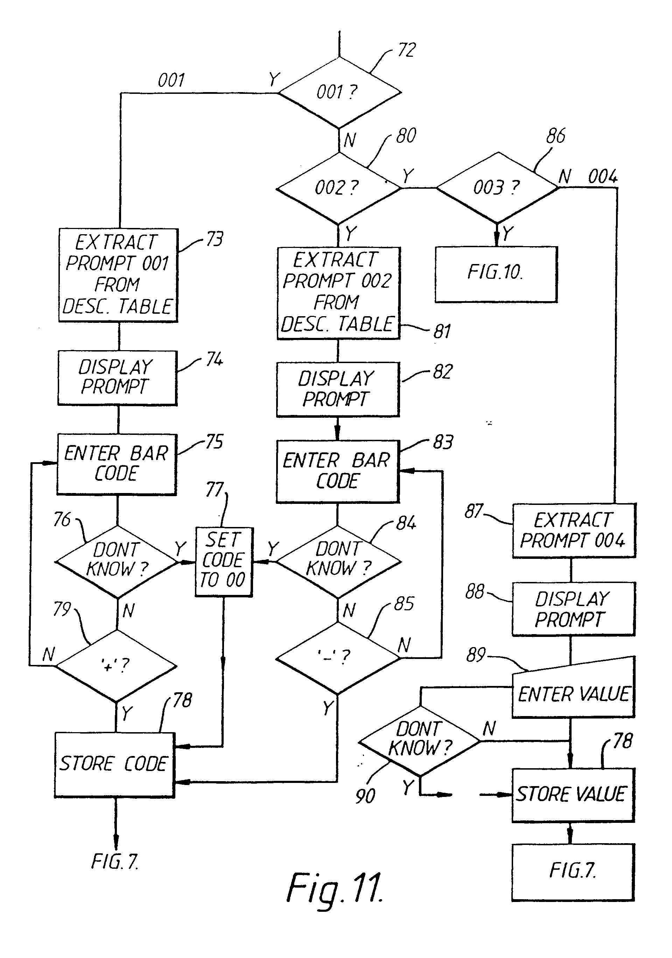

and the relevant page of the code book is shown in Figure 9. Here are shown attribute sets 58 (L) for "brand", 59(M) for "baked in-store" and 60(N) for "packaging". It will be seen that the next group from the sequence table record indicates that the code category should be L and it will issue a message corresponding to message code 011, which in this case is "brand" to correspond with the printed instructions on the code device. The code range is 01 to 04 and this will be seen to correspond with what is shown in Figure 9. The process then repeats for attribute group M, set 59(M), displaying the prompt "baked in store" and then a further group N corresponding to set 60(N) with a range of 88 to 90 ( goes from step 57 to Figure 11).

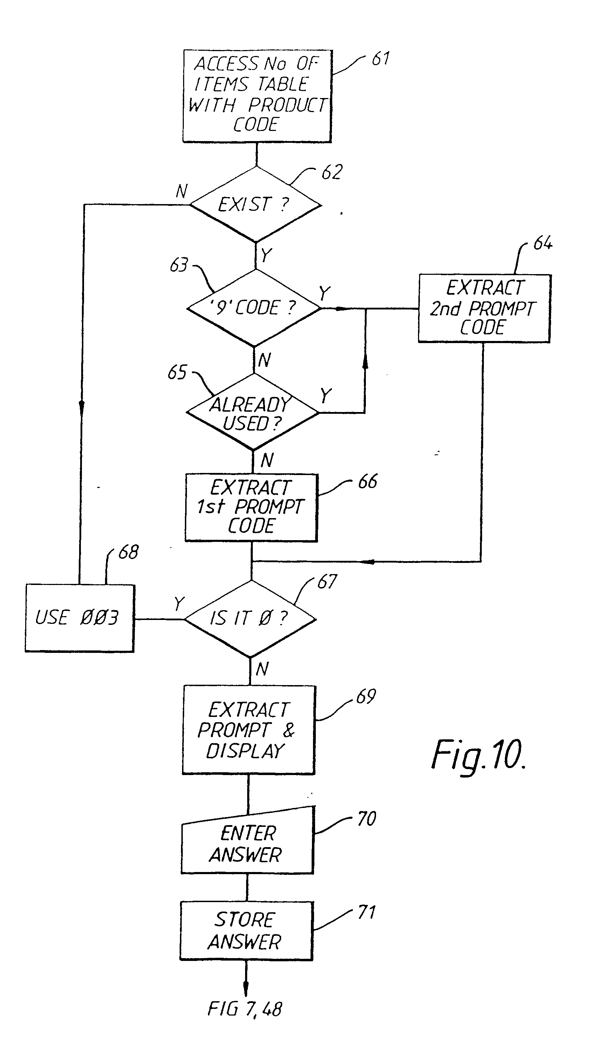

The next group read from memory will be seen to comprise only the prompt code 004 and this causes the program to branch via the special code test at 50 which goes to Figure 10.

Following that attribute group the final attribute group is found and that contains the special code 003 which again causes a branch at 50 to Figure 10.

Reference will now be made to the specific circumstance in which the attribute code range as shown in the sequence table incorporates a number from 90 to 99. This is primarily to initiate a "number of items" routine which is shown in Figure 10. This routine operates in conjunction with a "fresh foods number of items pointer table" already described and a specific example of the contents of which might be as follows:

```
20 022 000
50 003 000
38 031 000
23 003 000
43 018 017
24 018 017
25 018 017
48 018 017
27 036 000
28 036 000
42 037 000
47 037 000
```

At 61 this table is accessed using the first two digits of the product code, which are 43 in the specific example. It will be seen in this case that the description table provides two digits which are 018 and 017. At 62 it is tested to see whether this entry exists. If it should not exist, code 003 is taken as a default. At 63, the '9' code situation is detected, so the second prompt is extracted as at 64. Otherwise, at 65 a test is made to find out if this entry has already been used for the current product and if it has not, then the first prompt code is extracted as at 66, otherwise the second prompt would be extracted as at 64. This code is tested to see if it is a 0 at 67 in which case, at 68, the code 003 is utilised for the next step at 69. At step 69 the code obtained is used to extract the prompt from the attribute description table, and in this example it will be seen that the prompt is "number of items" which is displayed , the terminal then waiting for an answer via the keyboard as at 70. When the result has been entered the answer is stored in memory as at 71. The routine then returns to item 48 in Figure 7.

Figure 11 indicates the routines for the special codes 001 to 004.

Firstly there will now be indicated the process involved if the special code is 001, this being detected at 72 and directing the process to 73 where the prompt corresponding to 001 is extracted from the description table and is then displayed at 74, this prompt being "country of origin" in this example. The code book contains pages including a list of many countries each with its own unique bar code. One of these bar codes is a "Dont know" entry but it would of course be possible to implement the system to use the "Dont know" key in its place, detection of such a key being illustrated at 76 which causes the country code to be set to 0 at 77 before being stored at 78. If, on the other hand, a country bar code is scanned, it is validated at 79 before being stored at 78, the process then returning to item 48 of Figure 7.

If a special code of 002 is detected at 80 in Figure 9, this enters a "weight" routine which commences by extracting prompt 002 from the description table 81 and by displaying that prompt at 82. A plurality of weights and weight ranges is displayed in the code device 3 each with an associated unique bar code and the user scans a selected one of those bar codes at 83 or presses the 'Dont know' key as indicated at 84. If a bar code is entered, it is validated at 85 and the data is stored as indicated at 78.

If the code detected is 003 at 86, then the "number of items" routine is entered as shown in Figure 10 and the appropriate prompt found and displayed. It should be noted that this routine may be previously have been accessed via the digit 9 test, but the "already used" state will not have been set, so the first prompt will be used.

If the code is 004, the system branches to a "price" routine which commences by extracting prompt 004 from the description table at 87, followed by the display of that prompt at 88. The system then waits for the user to enter a value at 89 via the keyboard with a separate test of the "Dont know" key at 90, ,whereafter the appropriate value is stored at 78 and the process returns to Figure 7 at 48 to get the next code group from the attribute sequence table record.

This completes the description of the prime elements of the system but further details will now be briefly indicated.

With regard to the milk purchase reminder, this is to display to the panel members if they have regular milk deliveries (as denoted by the milk delivery flag) and have forgotten to add milk purchasing for "this week". The message "please enter any milk deliveries" is displayed when the terminal is switched on and before the shopping trip prompt and may be cleared by pressing the CLEAR key. The milk delivery flag is set by the installer manually during installation in the set up part of the program. Alternatively, the flag may be set on or off by loading record type 01 to the parameter file.

The hidden menu 24 of Figure 4 is available to the installer and requires the entry of a password and thus commences with the prompt "enter password". This then gives options to the installer of "line test?" of

13

"call direct?" giving a line test facility and a direct call test respectively.

A further feature of the system is that it can store when a household is going on holiday, this being entered at any point on the top level menu by pressing the HOLS key. When the terminal is switched on again by the household, the holiday flag in memory is reset to 0.

Finally it remains to indicate briefly the process indicated at the lower part of Figure 5 for processing "standard products" and "random weight products".

In the case of a standard product, the prompt issued at 91 is "special offer?" a range of which is provided in bar code form on a page of the code device 3. This is then followed at 92 by a "price" prompt requiring keyboard entry of the price, followed by a "number bought" prompt 93, again requiring a keyboard entry.

A further route is for price encoded products and this goes to a prompt at 94 of "weight", awaiting an entry from the bar code weight section of the code device. This is followed by the "price" prompt at 95 to enter the actual price paid (not necessarily equal to the encoded price).

## Claims

1. A data gathering system having a code device (3) comprising a plurality of zones (9), each containing a machine readable code, and a terminal comprising means (7) for displaying a sequence of messages, data input means (6,8) comprising code reading means (8) for reading said machine readable codes, and storage means (5) for storing the data input at the input means, characterised in that said zones (9) are arranged in sets (42, 43, 44) to define in each said set alternative responses to messages, and said sets are arranged into groups each of which provides alternative responses to a sequence of messages pertaining to that group, and the terminal comprising: means (5) for storing a plurality of sequences of message identifiers defining messages to be displayed; decision-making means coupled to the code reading means for causing the selection of one of said sequences in dependence upon a code read by said code reading means; and means for controlling interaction between said input means, said decision-making means and said displaying means for displaying at the displaying means a first message defined by the selected sequence and for displaying, in response to a sequence of data input at the input means, respective messages defined by subsequent identifiers of the selected sequence.

2. A system as claimed in claim 1, wherein, in said code device, each group has a first set (41, 42) having a code which is an identifying code uniquely defining said group, and the decision-making means has means responsive to the identifying codes to select for display at the displaying means the sequence of messages corresponding to the read identifying code.

3. A system as claimed in claim 1 or 2, wherein the code device comprises labels associated with respective sets to define correspondence between said messages and said sets.

4. A system as claimed in claim 1, 2 or 3, wherein the sets of codes of said code device are physically arranged in sequences corresponding to said sequences of data items.

5. A system as claimed in any one of the preceding claims, wherein, in said code device, all the codes in the sets are unique within each set.

6. A system as claimed in claim 5, wherein all said codes of all the sets of a plurality of groups are unique.

7. A system as claimed in claim 6, wherein the codes of the sets represent unique non-overlapping ranges of values.

8. A system as claimed in claim 6 or 7, wherein each of said plurality of sequences comprises in each of at least some of said message identifiers a data portion defining valid code values pertaining to the message defined by the identifers, and the terminal comprises data verifying means for comparing a code read in response to a message with the valid code values and means for permitting storage of the code read only when said data verifying means detects a valid code value.

9. A system as claimed in claim 8, wherein the terminal has means for causing a wait for re-entry of data when the data verifying means compares a code read which is not a valid code value.

10. A system as claimed in any one of the preceding claims, wherein said storing means comprises read/write memory having data input means by which a replacement plurality of sequences may be written into the storing means from an external device.

11. A system as claimed in claim 10, comprising communication input/output means for updating said read/write memory from a remote central station and for reading out to the central station data from the storage means.

12. A system as claimed in any one of the preceding claims, wherein there are means storing a set of ordered pairs of data items a first of which is one of said identifiers and a second of which is message text, and the terminal comprises means for reading said set of ordered pairs to obtain the message text for display from the identifer currently being processed.

13. A data gathering terminal of kind to communicate with a remote central station and comprising: means (7) for displaying messages; data input means (6, 8) comprising a code reading means (8) for reading data conveyed by machine readable codes; and storage means (5) for storing data supplied to said terminal by said data input means; characterised by read/write storing means (5) for storing a plurality of data sets each comprising a unique set identifier and a sequence of message identifiers; selection means responsive to a first code read by the reading means to select one of said data sets in dependence upon correspondence between the set identifer and the data of said first code; means for causing the display at the displaying means (7) of a sequence of messages corresponding to respective message identifers of the selected data set; means for causing a wait for the input of data at said data input means in between the display of successive ones of the messages of the sequence of messages; and communications input/output means (2) for downloading data into the sequence storing means from a central station and for reading out data from said storage means to a central station.

14. A terminal as claimed in claim 13, wherein the data input means further comprises numeric data input means by which a user is able to input numeric data into said storage means.

15. A terminal as claimed in claim 14, and comprising means responsive to any one of a subset of unique ones of said message identifers to require input of numeric data at said data input means.

16. A terminal as claimed in claim 15 and comprising means for enabling input of numeric data only from said numeric data input means in response to any identifier of said subset of unique identifiers.

17. A terminal as claimed in any one of claims 13 to 16, wherein each of said plurality of data sets comprises in association with each of at least some of said message identifiers a data portion defining valid code values pertaining to the message defined by the identifier, and the terminal comprises: data verifying means for comparing a code read in response to a message with the valid code values; and means for permitting storage of the code read only when said data verifying means detects a valid code value.

18. A terminal as claimed in claim 17, wherein the data verifying means is operable to identifying as a valid code value a value in a range of values.

19. A terminal as claimed in any one of claims 13 to 18, wherein there are mean (5) storing a set of ordered pairs of data items a first of which is one of said identifiers and a second of which is message text, and the terminal comprises means for reading said set of ordered pairs to obtain the message text for display from the message identifer currently being processed.

20. A terminal as claimed in claim 19, wherein the communications input/output means (2) are coupled to the storing means (5) for the set of ordered pairs to download from a remote central station data items for said set of ordered pairs of data items.

21. A code device comprising: a plurality of zones (9) each containing a machine readable code conveying data; characterised by a first user readable label for each code; said zones being physically arranged in sets to define in each set alternative responses to a message; a second user readable label associated with each set; and said sets being physically arranged in a plurality of groups, each group providing a physical sequence of sets of machine readable responses to a sequence of messages corresponding to said second labels, all said codes of all the sets of a plurality of groups being unique.

22. A code device as claimed in claim 21, wherein the codes of the sets represent unique non-overlapping ranges.

23. A code device as claimed in claim 22 or 23. wherein the code is a bar code.

24. A method of communicating data regarding user buying habits from a user terminal to a central station comprising:

(a) downloading into a user terminal sequences of prompt identifiers, with each sequence corresponding to a different product range;

(b) using a code reader coupled to the user terminal to read a machine readable code selected by the user from a set of codes defining product ranges;

(c) selecting in the terminal that sequence of prompt identifiers corresponding to the code read;

(d) displaying at the user terminal a prompt defined by a first identifer of the selected sequence;

(e) using the code reader to read a user selected code, selected from a set of codes defining a product attribute corresponding to the last displaying prompt;

(f) storing the read code in storage means of the user terminal;

(g) displaying at the user terminal a further prompt defined by a subsequent identifier of the selected sequence;

(h) repeating steps (e), (f) & (g) a number of times determined by the selected sequence;

15

(i) communicating the data stored in the storage means to the central station.

25. A method as claimed in claim 24, wherein a plurality of identifiers of the sequences are associated with unique code value ranges and the method includes between steps (e) and (f) the step of detecting when the current identifier is associated with a code value range and, in that case, comparing a code read with the code value range and proceeding to step (f) only when the comparing step identifies a valid code read.

Fig. 1.

| END<br>OFF | ↑ | ON |
|---|---|---|
| HOLS | ↓ | * |
| 1 | 2 | 3 |
| 4 | 5 | 6 |
| 7 | 8 | 9 |
| NO<br>OFFER | 0 | ENTER |
| CLEAR<br>NO | DON'T<br>KNOW | YES |

*Fig. 2.*

| 01 | TIME / MILK / DATA BUFFER |
|----|---------------------------|
| 02 | TIME WINDOWS |
| 03 | MESSAGES |
| 04 | FRESH FOODS ATTRIBUTES DESCRIPTIONS |
| 05 | FRESH FOODS ATTRIBUTES SEQUENCE TABLE |
| 06 | NUMBER OF ITEMS TABLE |

*Fig. 3.*

Fig. 4.

Fig. 5.

Purchaser

_____  1  ||||||||||||||||||

_____  2  ||||||||||||||||||

_____  3  ||||||||||||||||||

_____  4  ||||||||||||||||||

_____  5  ||||||||||||||||||

_____  6  ||||||||||||||||||

_____  7  ||||||||||||||||||

_____  8  ||||||||||||||||||

_____  9  ||||||||||||||||||

_____  0  ||||||||||||||||||

Fig. 6.

Fig. 7.

Bread/
Rolls etc.
(savoury)

43[J]

Variety

44[K]

Flour

Loaf
23A1

41

Bread, Buns,
Cakes etc.

42

| Bloomer 01 | French Stick 04 | White 01 |

| Cob 02 | Tin 05 | Softgrain White 02 |

| Farmhouse 03 | Other 06 | Bran 03 |

Rolls
43A1

Baps
43A2

Pitta Bread
43A3

Croissant
43A4

Crumpets/Pikelets
43A5

Bran/ 04
Wholemeal

Wheatgerm
05

Other/
Mixed 06

Fig. 8.

*58[L]* *59[M]* *60[N]*

| Brand | Baked In-Store | Packaging |
|---|---|---|

Shops Own
Brand    01

Other Brand
        02

Not
Branded  03

Don't Know
        04

Yes
        01

No
        02

Don't Know
        03

Prewrapped/Packaged
Rolls, Baps, etc. (not loaf)
        90

Enter
● Number of
  Items per
  Pack
  (Use
  Keypad

Prewrapped
Loaf     88

Unwrapped/
Loose    89

Enter
● Price,
  then....
● Quantity
  Purchased
  (Use
  Keypad)

# Fig. 9.

Fig.10.

ACCESS No OF
ITEMS TABLE
WITH PRODUCT
CODE                    61

EXIST ?                 62
N                       Y

'9' CODE ?              63
Y                       EXTRACT
                        2nd PROMPT
N                       CODE        64

ALREADY
USED ?                  65
Y

N

EXTRACT
1st PROMPT
CODE                    66

USE 003                 68

IS IT 0 ?               67
Y

N

EXTRACT
PROMPT &
DISPLAY                 69

ENTER
ANSWER                  70

STORE
ANSWER                  71

FIG 7, 48

Fig. 11.